(19) Europäisches Patentamt
European Patent Office
Office européen des brevets

(11) **EP 4 589 897 A1**

(12) **EUROPEAN PATENT APPLICATION**
published in accordance with Art. 153(4) EPC

(43) Date of publication:
**23.07.2025 Bulletin 2025/30**

(21) Application number: **23884566.3**

(22) Date of filing: **12.10.2023**

(51) International Patent Classification (IPC):
***H04L 27/00*** (2006.01)

(52) Cooperative Patent Classification (CPC):
**H04L 27/00; H04W 52/02;** Y02D 30/70

(86) International application number:
**PCT/CN2023/124132**

(87) International publication number:
**WO 2024/093634 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022 CN 202211344650**

(71) Applicant: **Huawei Technologies Co., Ltd.
Shenzhen, Guangdong 518129 (CN)**

(72) Inventors:
• **TIE, Xiaolei
Shenzhen, Guangdong 518129 (CN)**
• **XUE, Lixia
Shenzhen, Guangdong 518129 (CN)**
• **XUE, Yifan
Shenzhen, Guangdong 518129 (CN)**
• **LUO, Zhihu
Shenzhen, Guangdong 518129 (CN)**
• **LEI, Zhendong
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **INFORMATION TRANSMISSION METHOD AND APPARATUS**

(57) This application provides an information transmission method and apparatus. The method includes: receiving, in an envelope-demodulation scheme, first indication information and second indication information that are respectively modulated based on different modulation schemes, where a combination of the first indication information and the second indication information indicates whether to wake up a terminal device; and determining, based on the combination of the first indication information and the second indication information, whether to wake up the terminal device. For example, the first modulation scheme is an on-off keying modulation scheme, and the second modulation scheme is a frequency shift keying modulation scheme. The method further includes: receiving, in a non-envelope-demodulation scheme, third indication information modulated based on a third modulation scheme, where the third indication information indicates cell broadcast information that needs to be used after the terminal device is woken up. For example, the third modulation scheme is a phase modulation scheme. In this application, modulation efficiency and power consumption of different modulation schemes can be coordinated, to improve resource utilization.

FIG. 4

**Description**

This application claims priority to Chinese Patent Application No. 202211344650.9, filed with the China National Intellectual Property Administration on October 31, 2022 and entitled "INFORMATION TRANSMISSION METHOD AND APPARATUS", which is incorporated herein by reference in its entirety.

**TECHNICAL FIELD**

This application relates to the communication field, and more specifically, to an information transmission method and apparatus.

**BACKGROUND**

A terminal device may receive a wake-up signal through a separate low-power small circuit, for example, a wake-up radio (wake-up radio, WUR), and a main circuit may be in a deep sleep state. After the terminal device detects the wake-up signal through the WUR, the terminal device triggers wake-up of the main circuit. After the main circuit is woken up, the terminal device may perform a paging (paging) receiving process through the main circuit, for example, receive a paging message.

Currently, to implement low detection power consumption, information carried in the wake-up signal is generally modulated in an on-off keying (on-off keying, OOK) modulation scheme. In the OOK modulation scheme, information is carried by using a symbol in a time dimension, resulting in low spectral efficiency. Therefore, how to improve resource utilization when a WUR technology is used becomes an urgent problem to be resolved.

**SUMMARY**

This application provides an information transmission method and apparatus, so that information modulated or demodulated in different modulation schemes can be compatible in a communication system, to improve resource utilization.

According to a first aspect, an information transmission method is provided. The method may be performed by a terminal device, or may be performed by a component (for example, a chip or a circuit) in the terminal device. This is not limited herein.

The method may include: receiving, from a network device in an envelope-demodulation scheme, first indication information modulated based on a first modulation scheme and second indication information modulated based on a second modulation scheme, where a combination of the first indication information and the second indication information indicates whether to wake up the terminal device, and the first modulation scheme is different from the second modulation scheme; and determining, based on the combination of the first indication information and the second indication information, whether to wake up the terminal device.

In the foregoing solution, the network device sends, to the terminal device, two pieces of indication information respectively modulated based on two different modulation schemes, and indicates, by using the two pieces of indication information, whether to wake up the terminal device. After receiving the two pieces of indication information in the envelope-demodulation scheme, the terminal device determines whether to wake up the terminal device. In this way, information modulated or demodulated in different modulation schemes can be compatible in a communication system, to coordinate modulation efficiency and power consumption of different modulation schemes, and improve resource utilization.

With reference to the first aspect, in some implementations of the first aspect, the combination of the first indication information and the second indication information specifically indicates, by indicating identification information of the terminal device, to wake up the terminal device.

According to a second aspect, an information transmission method is provided. The method may be performed by a terminal device, or may be performed by a component (for example, a chip or a circuit) in the terminal device. This is not limited herein.

The method may include: receiving, from a network device in an envelope-demodulation scheme, first indication information modulated based on a first modulation scheme and second indication information modulated based on a second modulation scheme, where the first indication information indicates whether to wake up the terminal device, the second indication information indicates an operation performed after the terminal device is woken up, and the first modulation scheme is different from the second modulation scheme; and determining, based on the first indication information, whether to wake up the terminal device.

In the foregoing solution, the network device sends, to the terminal device, two pieces of indication information respectively modulated based on two different modulation schemes, the first indication information in the two pieces of indication information indicates whether to wake up the terminal device, and the second indication information in the two pieces of indication information indicates the operation performed after the terminal device is woken up. After receiving the two pieces of indication information in the envelope-demodulation scheme, the terminal device determines whether to wake up the terminal device. In this way, information modulated or demodulated in different modulation schemes can be compatible in a communication system, to coordinate modulation efficiency and power consumption of different modulation schemes, and improve resource utilization.

With reference to the second aspect, in some implementations of the second aspect, the first indication information specifically indicates, by indicating identification information of the terminal device, to wake up the terminal device.

With reference to the second aspect, in some implementations of the second aspect, when it is determined, based on the first indication information, to wake up the terminal device, the method further includes: determining, based on the second indication information, the operation performed after the terminal device is woken up.

In the foregoing solution, when it is determined to wake up the terminal device, the operation performed after the terminal device is woken up can be further determined based on the second indication information. The first indication information and the second indication information are sent together, so that signaling overheads can be reduced.

With reference to the first aspect or the second aspect, in some implementations, within a same time period, a quantity of bits for transmission of the first indication information is less than a quantity of bits for transmission of the second indication information.

With reference to the first aspect or the second aspect, in some implementations, the first modulation scheme includes an on-off keying modulation scheme, and the second modulation scheme includes a frequency shift keying modulation scheme.

In the foregoing solution, one signal sent by the network device to the terminal device separately carries, in time domain and frequency domain, indication information modulated based on different modulation schemes, so that the resource utilization can be further improved.

With reference to the first aspect or the second aspect, in some implementations, the method further includes: receiving, from the network device in a non-envelope-demodulation scheme, third indication information modulated based on a third modulation scheme, where the third indication information indicates cell broadcast information that needs to be used after the terminal device is woken up.

In the foregoing solution, when it is determined to wake up the terminal device, the cell broadcast information that needs to be used after the terminal device is woken up can be further determined based on the third indication information. The first indication information and the second indication information are sent together, so that the signaling overheads can be reduced.

With reference to the first aspect or the second aspect, in some implementations, the third modulation scheme includes a phase modulation scheme.

According to a third aspect, an information transmission method is provided. The method may be performed by a network device, or may be performed by a component (for example, a chip or a circuit) in the network device. This is not limited herein.

The method may include: generating first indication information and second indication information, where a combination of the first indication information and the second indication information indicates whether to wake up a terminal device; and sending, to the terminal device, the first indication information modulated based on a first modulation scheme and the second indication information modulated based on a second modulation scheme, where the first modulation scheme is different from the second modulation scheme.

With reference to the third aspect, in some implementations of the third aspect, the combination of the first indication information and the second indication information specifically indicates, by indicating identification information of the terminal device, to wake up the terminal device.

According to a fourth aspect, an information transmission method is provided. The method may be performed by a network device, or may be performed by a component (for example, a chip or a circuit) in the network device. This is not limited herein.

The method may include: generating first indication information and second indication information, where the first indication information indicates whether to wake up a terminal device, and the second indication information indicates an operation performed after the terminal device is woken up; and sending, to the terminal device, the first indication information modulated based on a first modulation scheme and the second indication information modulated based on a second modulation scheme, where the first modulation scheme is different from the second modulation scheme.

With reference to the fourth aspect, in some implementations of the fourth aspect, the first indication information specifically indicates, by indicating identification information of the terminal device, to wake up the terminal device. With reference to the third aspect or the fourth aspect, in some implementations, within a same time period, a quantity of bits for transmission of the first indication information is less than a quantity of bits for transmission of the second indication information.

With reference to the third aspect or the fourth aspect, in some implementations, the first modulation scheme includes an on-off keying modulation scheme, and the second modulation scheme includes a frequency shift keying modulation scheme.

With reference to the third aspect or the fourth aspect, in some implementations, the method further includes: sending, to the terminal device, third indication information modulated based on a third modulation scheme, where the third indication information indicates cell broadcast information that needs to be used.

With reference to the third aspect or the fourth aspect, in some implementations, the third modulation scheme includes a phase modulation scheme.

With reference to any one of the first aspect to the fourth aspect, in some implementations, the first indication information and the second indication information are carried in one signal.

In the foregoing solution, the two pieces of indication information are carried in one signal. In comparison with a case in which the network device separately sends a signal modulated based on the first modulation scheme and a signal modulated based on the second modulation scheme, this can reduce resource overheads.

With reference to any one of the first aspect to the fourth aspect, in some implementations, the first indication information, the second indication information, and the third indication information are carried in a same signal.

In the foregoing solution, a same signal is enabled to carry more information, to further improve resource utilization.

According to a fifth aspect, an information transmission method is provided. The method may be performed by a terminal device, or may be performed by a component (for example, a chip or a circuit) in the terminal device. This is not limited herein.

The method may include: detecting energy at at least two frequency domain positions; and when the energy is detected at all of the at least two frequency domain positions, determining that first indication information modulated based on a first modulation scheme is received; or when the energy is detected at a part of the at least two frequency domain positions, determining that first indication information modulated based on a first modulation scheme and second indication information modulated based on a second modulation scheme are received.

In the foregoing solution, a terminal can demodulate indication information modulated based on different modulation schemes, so that information modulated or demodulated in different modulation schemes can be compatible by using a communication system.

With reference to the fifth aspect, in some implementations of the fifth aspect, the first modulation scheme includes an on-off keying modulation scheme, and the second modulation scheme includes a frequency shift keying modulation scheme.

With reference to the fifth aspect, in some implementations of the fifth aspect, when the energy is detected at the part of the at least two frequency domain positions, the method further includes: when a value of energy detected at a first frequency domain position is a largest value in values of the energy detected at the at least two frequency domain positions, determining the second indication information based on the first frequency domain position.

According to a sixth aspect, an information transmission method is provided. The method may be performed by a terminal device, or may be performed by a component (for example, a chip or a circuit) in the terminal device. This is not limited herein.

The method may include: detecting energy at at least two frequency domain positions, where the at least two frequency domain positions include a first frequency domain position and a second frequency domain position; and determining, based on a first ratio of a value of energy received at the first frequency domain position to a value of energy received at the second frequency domain position, whether first indication information modulated based on a first modulation scheme or second indication information modulated based on a second modulation scheme is received, where the first frequency domain position is different from the second frequency domain position, to improve resource utilization.

In the foregoing solution, a terminal can demodulate indication information modulated based on different modulation schemes, so that information modulated or demodulated in different modulation schemes can be compatible by using a communication system.

With reference to the sixth aspect, in some implementations of the sixth aspect, the first modulation scheme includes an on-off keying modulation scheme, and the second modulation scheme includes a frequency shift keying modulation scheme.

With reference to the sixth aspect, in some implementations of the sixth aspect, the determining, based on a first ratio of a value of energy received at the first frequency domain position in the at least two frequency domain positions to a value of energy received at the second frequency domain position in the at least two frequency domain positions, whether first indication information modulated based on a first modulation scheme and second indication information modulated based on a second modulation scheme are received includes: when the first ratio is greater than or equal to a second threshold or the first ratio is less than or equal to a third threshold, determining that the first indication information and the second indication information are received.

With reference to the sixth aspect, in some implementations of the sixth aspect, the second frequency domain position includes at least one third frequency domain position, the first ratio includes at least one second ratio, the second ratio is a ratio of the value of the energy received at the first frequency domain position to a value of a capability received at each third frequency domain position, and the method further includes: when each of the at least one second ratio is greater than or equal to the second threshold, determining the second indication information based on the first frequency domain position; and when one or more ratios in the at least one second ratio are less than or equal to the third threshold, determining the second indication information based on the third frequency domain position corresponding to a smallest value in the one or more ratios.

According to a seventh aspect, an information transmission method is provided. The method may be performed by a terminal device, or may be performed by a component (for example, a chip or a circuit) in the terminal device. This is not limited herein.

The method may include: detecting energy at one time domain position and at least two frequency domain positions; when the energy is detected at the time domain position, determining that first indication information modulated based on a first modulation scheme is received; and when the first indication information is received, determining, based on a frequency domain position corresponding to a largest value in values of the energy detected at the at least two frequency domain positions, second indication information modulated based on a second modulation scheme.

In the foregoing solution, a terminal can demodulate indication information modulated based on different modulation schemes, so that information modulated or demodulated in different modulation schemes can be compatible by using a communication system. The terminal device separately detects the energy at the time domain position and the frequency domain position, and determines a detection result of the time domain position only when the energy is detected at the time domain position. Therefore, when the terminal device does not detect the energy at the time domain position, determining of the detection result of the time domain position can be avoided, to reduce energy consumption of the terminal device and save a resource.

With reference to the seventh aspect, in some implementations of the seventh aspect, the first modulation scheme includes an on-off keying modulation scheme, and the second modulation scheme includes a frequency shift keying modulation scheme.

With reference to any one of the fifth aspect, the sixth aspect, or the seventh aspect, in some implementations, the method further includes: determining, based on the value of the detected energy being greater than or equal to a first threshold, that the energy is detected.

According to an eighth aspect, a communication apparatus is provided. The apparatus is configured to perform the method according to any one of the possible implementations of the first aspect to the seventh aspect. Specifically, the apparatus may include a unit and/or a module, for example, a processing unit and/or a communication unit, configured to perform the method according to any one of the possible implementations of the first aspect to the seventh aspect.

In an implementation, the apparatus is a communication device (for example, a network device or a terminal device). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the communication device (for example, the network device or the terminal device). When the apparatus is a chip, a chip system, or a circuit used in the communication device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a ninth aspect, a communication apparatus is provided. The apparatus includes at least one processor, configured to execute a computer program or instructions stored in a memory, to perform the method according to any one of the possible implementations of the first aspect to the seventh aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a network device or a terminal device).

In another implementation, the apparatus is a chip, a chip system, or a circuit used in the communication device (for example, the network device or the terminal device).

According to a tenth aspect, a processor is provided, configured to perform the method provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eleventh aspect, a computer-readable storage medium is provided. The computer-readable medium stores program code to be executed by a user equipment, and the program code is used to perform the method according to any one of the possible implementations of the first aspect to the seventh aspect.

According to a twelfth aspect, a computer program product including instructions is provided. When the computer program product is run on a computer, the computer is enabled to perform the method according to any one of the possible implementations of the first aspect to the seventh aspect.

According to a thirteenth aspect, a chip is provided. The chip includes a processor and a communication interface. The processor reads, through the communication interface, instructions stored in a memory, to perform any method according to the first aspect to the seventh aspect.

Optionally, in an implementation, the chip may further include a memory. The memory stores instructions, and the processor is configured to execute the instructions stored in the memory. When the instructions are executed, the processor is configured to perform any method according to the first aspect to the seventh aspect.

## BRIEF DESCRIPTION OF DRAWINGS

FIG. 1 is a network architecture to which this application is applicable;

FIG. 2 is a diagram of receiving a wake-up signal by a terminal device through a wake-up circuit;

FIG. 3 is a diagram of a waveform of a wake-up signal during OOK modulation;

FIG. 4 is a diagram of an information transmission method 100 according to this application;

FIG. 5 is a diagram of an information transmission method 200 according to this application;

FIG. 6 is a diagram of an information transmission method 300 according to this application;

FIG. 7 is a diagram of an information transmission method 400 according to this application;

FIG. 8 is a diagram of an information transmission method 500 according to this application;

FIG. 9 is a diagram of an information transmission method 600 according to this application;

FIG. 10 is a diagram of an information transmission apparatus 700 to which this application is applicable;

FIG. 11 is a diagram of another information transmission apparatus 800 to which this application is applicable; and

FIG. 12 is a diagram of a chip system 900 to which this application is applicable.

## DESCRIPTION OF EMBODIMENTS

The following describes technical solutions in embodiments of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A terminal device in embodiments of this application may alternatively be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data. For example, the terminal device may be a handheld device or an in-vehicle device with a wireless connection function. Currently, some examples of a terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device with a wireless communication function, a computing device or another processing device connected to a wireless modem, a wearable device, a terminal device in a 5G network, a terminal device in a future evolved public land mobile network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device may be a terminal device, or may be an apparatus, for example, a chip system or a chip, that can support the terminal device in implementing the function. The apparatus may be installed in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in the following in a broad sense, or may be replaced with the following names, for example, a NodeB (NodeB), an evolved NodeB (evolved NodeB, eNB), a next generation NodeB (next generation NodeB, gNB), a relay station, an access point, a transmission point (transmitting and receiving point, TRP), a transmitting point (transmitting point, TP), a primary station, a secondary station, a multi-standard radio (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form used by the network device are not limited in embodiments of this application.

The base station may be stationary or mobile. For example, a helicopter or a drone may be configured to serve as a mobile base station, and at least one cell may move based on a position of the mobile base station. In other examples, a helicopter or an unmanned aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

The network device and the terminal device may be deployed on land, including an indoor or outdoor device, a hand-held device, or a vehicle-mounted device; may be deployed on water; or may be deployed on an airplane, a balloon, and a satellite in the air. Scenarios in which the network device and the terminal device are located are not limited in embodiments of this application.

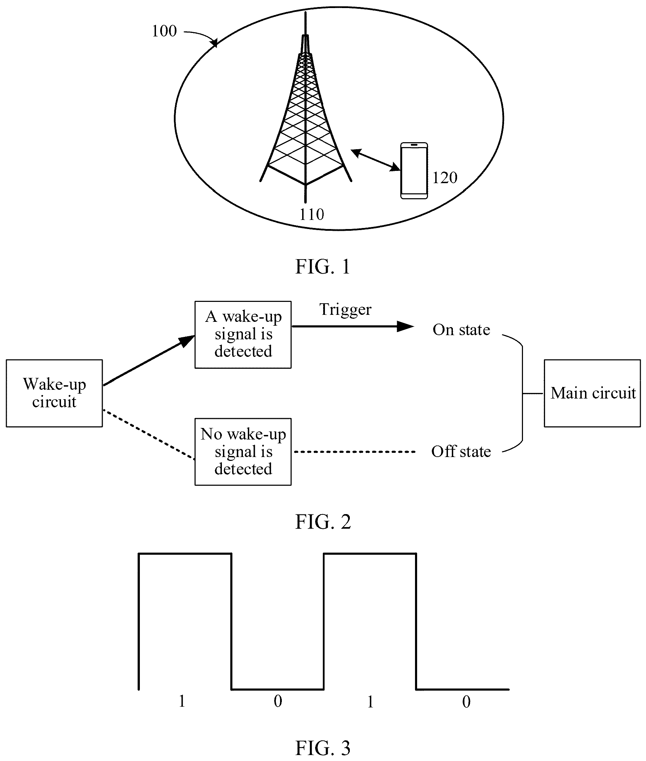

First, a network architecture to which this application is applicable is briefly described with reference to FIG. 1.

In example descriptions, FIG. 1 is a diagram of a wireless communication system 100 to which an embodiment of this application is applicable. As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. A plurality of antennas may be configured for both the network device and the terminal device, and the network device and the terminal device may communicate with each other by using a multi-antenna technology.

When the network device communicates with the terminal device, the network device may manage at least one cell, and there may be an integer quantity of terminal devices in one cell. Optionally, the network device 110 and the terminal device 120 form a single-cell communication system. Without loss of generality, a cell is denoted as a cell #1. The network device 110 may be a network device in the cell #1, or the network device 110 may serve a terminal device (for example, the terminal device 120) in the cell #1.

It should be noted that the cell may be understood as an area within coverage of a radio signal of the network device.

It should be understood that FIG. 1 is merely a simplified diagram of an example for ease of understanding. The wireless communication system 100 may further include another network device or may further include another terminal device that is not shown in FIG. 1. Embodiments of this application are applicable to any communication scenario in which a sending end device communicates with a receiving end device.

For ease of understanding of embodiments of this application, terms in this application are briefly described.

1. Paging (paging)

When a terminal device is in an idle (idle) state or an inactive (inactive) state, the terminal device may periodically receive paging. For example, a paging receiving procedure performed by the terminal device includes the following steps:

(1) The terminal device may obtain, through calculation, a paging frame (paging frame, PF) and a position of a paging occasion (paging occasion, PO) in the PF based on an identifier (identifier, ID) (UE ID) of the terminal device.

(2) The terminal device monitors a physical downlink control channel (physical downlink control channel, PDCCH) (for example, which may also be referred to as a paging PDCCH) in the PO. The PDCCH includes downlink control information (downlink control information, DCI) (for example, which may also be referred to as paging DCI).

(3) If the terminal device detects the PDCCH, the terminal device receives a physical downlink shared channel (physical downlink shared channel, PDSCH) (for example, which may also be referred to as a paging PDSCH) at a position at which the PDCCH is used for scheduling. The paging PDSCH includes a paging message (paging message), and the paging message may indicate specific terminal devices that are paged. For example, the paging PDSCH includes a maximum of 32 paging records (paging records), each paging record may include one UE ID, and the UE ID indicates a specific paged UE.

Paging can be classified into two types: core network paging (CN paging) and access network paging (RAN paging).

(1) Core network paging refers to paging received when the UE is in the idle state, and is initiated by a core network. The core network sends a UE ID of a paged UE to a network device that is to send paging information. For the core network paging, the UE ID is a 5G system architecture evolution (system architecture evolution, SAE) temporary mobile subscriber identifier (5G SAE temporary mobile station identifier, 5G-S-TMSI), and a length of the UE ID is, for example, 48 bits. The 5G-S-TMSI may be allocated by an access and mobility management function (access and mobility management function, AMF).

(2) Access network paging refers to paging received when the UE is in the inactive state, and is initiated by a network device. The network device may send a UE ID of a paged UE to another network device that is to send paging information. The network device is a base station corresponding to a cell in which the UE is located when the UE changes from a connected (connected) state to the inactive state. The cell may also be referred to as a last serving cell (last serving cell). For the access network paging, the UE ID is an inactive radio network temporary identifier (inactive radio network temporary identifier, I-RNTI), and a length of the UE ID is, for example, 40 bits. The I-RNTI may be allocated by the last serving cell.

It should be understood that the paging receiving procedure is merely an example for description. For example, for details, refer to a related standard. This is not limited in this application.

2. Envelope-demodulation (envelope-demodulation) and non-envelope-demodulation

The envelope-demodulation is a non-coherent demodulation scheme. The envelope-demodulation is a scheme of demodulating or detecting information carried in a signal by detecting an envelope of the signal.

Peak points of high-frequency signals of a time length are connected, so that a line above (positive) and a line below (negative) a horizontal coordinate indicating time may be obtained, and the two lines are referred to as envelope lines. The envelope line is a curve that reflects an amplitude change of the high-frequency signal. For a high-frequency signal with an equal amplitude, the two envelopes are parallel lines. When one low-frequency signal is used to perform amplitude modulation (that is, amplitude modulation) on one high-frequency signal, the low-frequency signal becomes an envelope line of the high-frequency signal.

The non-envelope-demodulation scheme in this application may be understood as a demodulation scheme other than the envelope-demodulation scheme. For example, information is carried by using a phase, and information carried by a signal is obtained through demodulation by detecting a phase of the signal.

3. Main circuit and wake-up circuit

Generally, regardless of whether a terminal device performs a paging receiving procedure in an idle state or an inactive state, or a terminal device receives data in a connected state, a same receiving module, a same receiver, or a same receiver circuit is used. In this application, for ease of description, a module that completes these functions or performs related steps is referred to as the main circuit. It may be understood that the main circuit is merely a name for differentiation, and a specific name does not limit the protection scope of this application. For ease of description, the main circuit is uniformly used for description below.

A signal received by the terminal device by using the main circuit may be referred to as being transmitted on the main link. The main link represents a connection relationship between the terminal device and a network device, and is a logical concept rather than a physical entity. It may be understood that the main link is merely a name for differentiation, and a specific name does not limit the protection scope of this application.

When the terminal device receives paging by using the main circuit, power consumption is high. For example, when receiving the paging, the terminal device first needs to receive a downlink signal by using a receiving module of the main circuit, and then the terminal device further needs to perform blind detection on a PDCCH, decode a received PDSCH, and so on. All these steps cause high power consumption. In addition, because the main circuit is complex, baseline power consumption or static power consumption during running of the main circuit is high.

To reduce the power consumption caused by receiving the paging by the terminal device, in a possible method, the terminal device may receive the signal by using a separate low-power small circuit, and the signal received by the terminal device by using the low-power small circuit may be referred to as a low-power wake-up signal (low-power wake-up signal, LP-WUS) or a wake-up signal. For example, the wake-up signal may indicate paging-related information, and the paging-related information may include, for example, whether one terminal device or one group of terminal devices are paged. The low-power small circuit may be implemented by using a separate small circuit or chip with a simple structure, and has low power consumption. For example, the low-power small circuit may be referred to as wake-up radio (wake-up radio, WUR), a wake-up circuit, a low-power circuit, or a wake-up receiver (wake-up receiver, WUR). A name of the low-power small circuit is not limited in this application. In this application, for ease of description, the low-power small circuit is referred to as a wake-up circuit. It may be understood that the wake-up circuit is merely a name for differentiation, and a specific name does not limit the protection scope of this application. For ease of description, the wake-up circuit is uniformly used for description below. In addition, for ease of description below, a signal received by the terminal device by using the wake-up circuit is referred to as a wake-up signal.

The signal received by the terminal device by using the wake-up circuit may be referred to as being transmitted on a wake-up link. The wake-up link represents a connection relationship between the terminal device and the network device, and is a logical concept rather than a physical entity. It may be understood that the wake-up link is merely a name for differentiation, and a specific name does not limit the protection scope of this application.

For example, FIG. 2 is a diagram of receiving a wake-up signal by a terminal device through a wake-up circuit.

As shown in FIG. 2, when the terminal device receives a signal by using the wake-up circuit, if the terminal device detects no wake-up signal associated with the terminal device, the terminal device continues to receive the signal by using the wake-up circuit, and a main circuit may be in an off state or a sleep state; or if the terminal device detects a wake-up signal associated with the terminal device, the terminal device triggers wake-up of a main circuit, in other words, enables the main circuit to be in/switched to an on state. The on state may also be referred to as an operating state, or referred to as an active state. After the main circuit is turned on, the terminal device may perform a paging receiving process. For example, the terminal device receives a paging PDCCH, and receives a paging PDSCH after detecting the paging PDCCH on a PO corresponding to the terminal device. Alternatively, after the main circuit is turned on, the terminal device may directly perform an access procedure. In this case, the wake-up signal received through the wake-up circuit may directly indicate a paged UE. After turning on the main circuit, the terminal device does not need to receive paging through the main circuit, but directly initiates random access.

To ensure a power consumption gain, the wake-up signal may be modulated based on on-off keying (on-off keying, OOK), or may be modulated based on frequency shift keying (frequency shift keying, FSK). The following briefly describes the two modulation schemes.

(1) OOK: Information is modulated depending on whether a signal is sent, and a corresponding wake-up circuit may receive the signal by using an envelope detection method. In an OOK modulation technology, demodulation can be implemented by a receiver with extremely low complexity, so that an objective of low power consumption of the wake-up circuit can be achieved.

For example, FIG. 3 is a diagram of a waveform of a wake-up signal during OOK modulation.

When a signal is modulated by using OOK, each bit, that is, an encoded bit, may correspond to one symbol (symbol). One symbol may also be referred to as a chip (chip), or may be referred to as another name. This is not limited herein.

For example, when the bit is 1, a signal is sent in a symbol length (that is, a signal transmit power is not 0 in the symbol length); or when the bit is 0, no signal is sent in a symbol length (that is, a signal transmit power is 0 in the symbol length). As shown in FIG. 3, the waveform shown in FIG. 3 may represent four bits 1010.

For another example, when the bit is 0, a signal is sent in a symbol length (that is, a signal transmit power is not 0 in the symbol length); or when the bit is 1, no signal is sent in a symbol length (that is, a signal transmit power is 0 in the symbol length). In this case, the waveform shown in FIG. 3 may represent four bits 0101.

(2) FSK: The FSK is a modulation technology in which information is modulated on a carrier frequency. When FSK modulation is used, one symbol may carry at least one piece of bit information. For example, it is assumed that an information bit that needs to be transmitted is a sequence including 0 and 1, and a modulated signal has four possible positions in frequency domain. For example, a signal with a sending frequency of f1 represents that a bit "00" is transmitted, a signal with a sending frequency of f2 represents that a bit "01" is transmitted, a signal with a sending frequency of f3 represents that a bit "10" is transmitted, and a signal with a sending frequency of f4 represents that a bit "11" is transmitted. At a receiving end, a frequency discrimination circuit may be used to detect a frequency of a received signal. If the signal frequency of f1 is detected, it is determined that the received bit is 00; if the signal frequency of f2 is detected, it is determined that the received bit is 01; if the signal frequency of f3 is detected, it is determined that the received bit is 10; or if the signal frequency of f4 is detected, it is determined that the received bit is 11.

The foregoing briefly describes the terms in this application, and details are not described in the following embodiments again.

It may be understood that the term "and/or" in this specification describes only an association relationship for associated objects and indicates that three relationships may exist. For example, A and/or B may indicate the following three cases: Only A exists, both A and B exist, and only B exists. In addition, the character "/" in this specification generally indicates an "or" relationship between the associated objects.

The following describes in detail an information transmission method provided in embodiments of this application with reference to the accompanying drawings. Embodiments provided in this application may be applied to the network architecture shown in FIG. 1. This is not limited. The information transmission method provided in embodiments of this application may be interacted between either a network device or a chip system in the network device and either a terminal device or a chip system in the terminal device. The following mainly describes interaction between the terminal device and the network device.

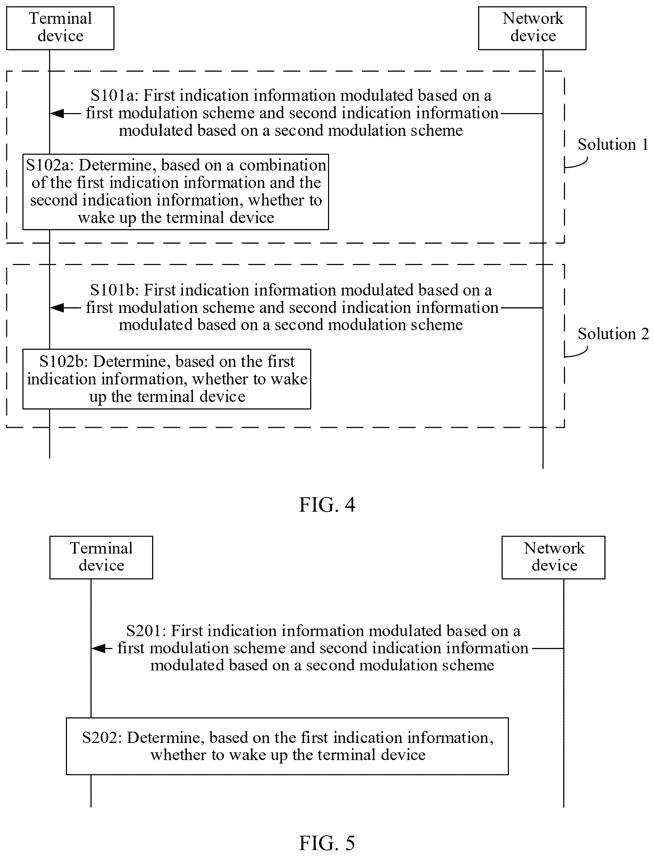

FIG. 4 is a diagram of an information transmission method 100 according to this application. The following separately provides two solutions of the method 100. In the method 100, an example in which a terminal device supports both a first modulation scheme and a second modulation scheme is used for description.

Solution 1:

S101a: A network device sends, to the terminal device, first indication information (referred to as first indication information #1 below for ease of description) modulated based on the first modulation scheme and second indication information (referred to as second indication information #1 below for ease of description) modulated based on the second modulation scheme. Correspondingly, the terminal device receives, from the network device in an envelope-demodulation scheme, the first indication information #1 modulated based on the first modulation scheme and the second indication information #1 modulated based on the second modulation scheme.

A combination of the first indication information #1 and the second indication information #1 indicates whether to wake up the terminal device. For example, the first indication information #1 and the second indication information #1 may be carried in a same wake-up signal, for example, the WUR.

The first modulation scheme is different from the second modulation scheme. For example, the first modulation scheme is an on-off keying (OOK) modulation scheme, and the second modulation scheme includes a frequency shift keying (FSK) modulation scheme. For another example, the first modulation scheme is an OOK modulation scheme based on one orthogonal frequency division multiplexing (orthogonal frequency division multiplexing, OFDM) symbol, and the second modulation scheme is an OOK modulation scheme based on a time segment in an OFDM symbol. In an OOK modulation scheme based on one cyclic prefix orthogonal frequency division multiplexing (cyclic prefix OFDM, CP-OFDM) symbol, 1 is represented by sending an OFDM symbol, and 0 is represented by not sending the OFDM symbol. In an OOK modulation scheme based on a plurality of time domain segments in an OFDM symbol, a non-cyclic prefix (cyclic prefix, CP) orthogonal frequency division multiplexing sampling point in an OFDM symbol may be divided into a plurality of time chips (chips) or time segments, and 1-bit information is carried depending on whether a signal is sent on each chip. In addition, an information rate of the OOK modulation scheme based on a time segment in an OFDM symbol is higher than that of the OOK modulation scheme based on one OFDM symbol.

That the terminal device receives the first indication information #1 and the second indication information #1 from the network device in the envelope-demodulation scheme may be implemented in the following manners. For example, the terminal device includes a separate low-power small circuit, for example, the wake-up circuit. The terminal device turns on the wake-up circuit, detects the first indication information #1 and the second indication information #1, obtains the first indication information #1 through demodulation based on the first modulation scheme, and obtains the second indication information #1 through demodulation based on the second modulation scheme.

Optionally, within a same time period, a quantity of bits for transmission of the first indication information #1 is less than a quantity of bits for transmission of the second indication information #1. For example, the first modulation scheme is OOK, and the second modulation scheme is FSK. Within the same time period, a ratio of the quantity of bits for transmission of the first indication information #1 to the quantity of bits for transmission of the second indication information #1 is $k: \log_2^N$, where N is a quantity of candidate frequency positions in the FSK scheme, N is a positive integer, k≥1, and k is an integer. For example, the candidate frequency domain position herein may be a candidate subcarrier.

Optionally, before S101a, the method 100 further includes: The network device generates the first indication information #1 and the second indication information #1.

S102a: The terminal device determines, based on the combination of the first indication information #1 and the second indication information #1, whether to wake up the terminal device.

For example, the terminal device includes a separate low-power small circuit, for example, the wake-up circuit. The terminal device further includes the main circuit. S102a may be understood as that the wake-up circuit determines, based on the combination of the first indication information #1 and the second indication information #1, whether to wake up the main circuit. Optionally, if the main circuit is woken up, the main circuit is used to receive a paging message on a PO or directly send a physical random access channel (physical random access channel, PRACH) on a random access (new random access, RACH) resource.

For example, the combination of the first indication information #1 and the second indication information #1 specifically indicates, by indicating identification information of the terminal device, to wake up the terminal device. The following uses a UE ID as an example of the identification information of the terminal device. Several possible examples are provided for how the combination of the first indication information #1 and the second indication information #1 indicates the identification information of the terminal device.

Example 1-1: The first indication information #1 is a first part of the UE ID of the terminal device, for example, 16 least significant bits of the UE ID. The second indication information #1 is a second part of the UE ID of the terminal device, for example, 32 most significant bits of the UE ID. The combination of the first indication information #1 and the second indication information #1 may indicate all information of 48 bits of the UE ID to the terminal device.

Example 1-2: The first indication information #1 is information obtained through compression of the UE ID of the terminal device. For example, the information obtained through the compression of the UE ID may be represented by using a bitmap (bitmap). Alternatively, the first indication information #1 is information about an ID of a paging group in which the terminal device is located. The second indication information #1 is the UE ID of the terminal device.

Example 1-3: The first indication information #1 and the second indication information #1 are the same, and both indicate the UE ID of the terminal device. In this example, the second indication information #1 can reconfirm (double check) the first indication information #1.

In the foregoing solution, the network device sends, to the terminal device, two pieces of indication information respectively modulated based on two different modulation schemes, and indicates, by using the two pieces of indication information, whether to wake up the terminal device. After receiving the two pieces of indication information in the envelope-demodulation scheme, the terminal device determines whether to wake up the terminal device. In this way, information modulated or demodulated in different modulation schemes can be compatible in a communication system, to coordinate modulation efficiency and power consumption of different modulation schemes, and improve resource utilization. Further, the two pieces of indication information are carried in one signal. In comparison with a case in which the network device separately sends a signal modulated based on the first modulation scheme and a signal modulated based on the second modulation scheme, this can reduce resource overheads.

It should be noted that the solutions in this application are applicable to two or more different modulation schemes. In this application, two different modulation schemes are used as an example for description, but this is not limited in this application. Unified descriptions are provided herein, and details are not described below again.

Optionally, the terminal device further supports a third modulation scheme. The method 100 further includes: The network device sends, to the terminal device, third indication information modulated based on the third modulation scheme. Correspondingly, the terminal device receives, from the network device in a non-envelope-demodulation scheme, the third indication information modulated based on the third modulation scheme. The third indication information indicates cell broadcast information used after the terminal device is woken up. After being woken up, the terminal device may measure or access a cell based on the third indication information.

For example, the third indication information may be a cell ID of the cell, or may be partial information of a system message of the cell, version information of a system message of the cell, information about whether a system message changes, or information about whether an earthquake or tsunami warning is sent in a range of the cell.

For example, the third modulation scheme includes a phase modulation scheme and an amplitude modulation scheme.

Optionally, the first indication information #1, the second indication information #1, and the third indication information are carried in a same signal.

In the foregoing solution, a same signal is enabled to carry more information, to further improve the resource utilization.

Solution 2:

S101b: A network device sends, to the terminal device, first indication information #2 (referred to as first indication information #2 below for ease of description) modulated based on the first modulation scheme and second indication information #2 (referred to as second indication information #2 below for ease of description) modulated based on the second modulation scheme. Correspondingly, the terminal device receives, from the network device in an envelope-demodulation scheme, the first indication information #2 modulated based on the first modulation scheme and the second indication information #2 modulated based on the second modulation scheme.

The first indication information #2 indicates whether to wake up the terminal device, and the second indication information #2 indicates an operation performed after the terminal device is woken up. For example, the first indication information #2 and the second indication information #2 may be carried in a same wake-up signal, for example, the WUR.

The first modulation scheme is different from the second modulation scheme. Specifically, for possible examples and related descriptions of the first modulation scheme and the second modulation scheme, refer to the corresponding content in Solution 1. Details are not described herein again.

For details about that the terminal device receives the first indication information #2 and the second indication information #2 from the network device in the envelope-demodulation scheme, refer to the descriptions in Solution 1 in which the terminal device receives the first indication information #1 and the second indication information #1 in the envelope-demodulation scheme. A difference lies in that the first indication information #1 and the second indication information #1 are replaced with the first indication information #2 and the second indication information #2.

Optionally, within a same time period, a quantity of bits for transmission of the first indication information #2 is less than a quantity of bits for transmission of the second indication information #2. For example, the first modulation scheme is OOK, and the second modulation scheme is FSK. Within the same time period, a ratio of the quantity of bits for transmission of the first indication information #2 to the quantity of bits for transmission of the second indication information #2 is $k: \log_2^N$, where N is a quantity of candidate frequency positions in an FSK scheme, N is a positive integer, k≥1, and k is an integer. For example, the candidate frequency domain position herein may be a candidate subcarrier.

Optionally, before S101b, the method 100 further includes: The network device generates the first indication information #2 and the second indication information #2.

S102b: The terminal device determines, based on the first indication information #2, whether to wake up the terminal device.

For example, the terminal device includes a separate low-power small circuit, for example, the wake-up circuit. The terminal device further includes the main circuit. S102b may be understood as that the wake-up circuit determines, based on the first indication information #2, whether to wake up the main circuit. Optionally, if the main circuit is woken up, the main circuit is used to receive a paging message on a PO or directly send a PRACH on a RACH resource.

For example, the first indication information #2 specifically indicates, by indicating identification information of the terminal device, to wake up the terminal device. The following uses a UE ID as an example of the identification information of the terminal device. Several possible examples are provided for how the first indication information #2 indicates the identification information of the terminal device.

Example 2-1: The first indication information #2 indicates all information about the UE ID.

Example 2-2: The first indication information #2 is information obtained through compression of the UE ID of the terminal device. For example, the information obtained through the compression of the UE ID may be represented by using a bitmap (bitmap).

Optionally, when it is determined, based on the first indication information #2, to wake up the terminal device, the method 100 further includes: The terminal device determines, based on the second indication information #2, the operation performed after the terminal device is woken up.

For example, the second indication information #2 may be identification information of a first cell, and the terminal device determines, based on the second indication information #2, that the terminal device communicates with the network device in the first cell after the terminal device is woken up.

For another example, the second indication information #2 may indicate whether the terminal directly initiates RACH access after being woken up or needs to read paging information. The terminal device determines, based on the second indication information #2, whether the terminal device directly initiates, by reading RACH configuration information, a random access procedure after being woken up or needs to first receive a paging message sent on a PO of the terminal.

In the foregoing solution, the network device sends, to the terminal device, two pieces of indication information respectively modulated based on two different modulation schemes, the first indication information in the two pieces of indication information indicates whether to wake up the terminal device, and the second indication information in the two pieces of indication information indicates the operation performed after the terminal device is woken up. After receiving the two pieces of indication information in the envelope-demodulation scheme, the terminal device determines whether to wake up the terminal device. When it is determined to wake up the terminal device, the operation performed after the terminal device is woken up can be further determined based on the second indication information. In this way, information modulated or demodulated in different modulation schemes can be compatible in a communication system, to coordinate modulation efficiency and power consumption of different modulation schemes. Further, the two pieces of indication information are carried in one signal. In comparison with a case in which the network device separately sends a signal modulated based on the first modulation scheme and a signal modulated based on the second modulation scheme, this can reduce resource overheads.

Optionally, the terminal device further supports a third modulation scheme. The method 100 further includes: The network device sends, to the terminal device, third indication information modulated based on the third modulation scheme. Correspondingly, the terminal device receives, from the network device in a non-envelope-demodulation scheme, the third indication information modulated based on the third modulation scheme. The third indication information indicates cell broadcast information used after the terminal device is woken up. After being woken up, the terminal device may measure or access a cell based on the third indication information.

For example, the third indication information may be a cell ID of the cell, or may be partial information of a system message of the cell, version information of a system message of the cell, information about whether a system message changes, or information about whether an earthquake or tsunami warning is sent in a range of the cell.

For example, the third modulation scheme includes a phase modulation scheme and an amplitude modulation scheme.

Optionally, the first indication information #2, the second indication information #2, and the third indication information are carried in a same signal.

In the foregoing solution, a same signal is enabled to carry more information, to further improve resource utilization.

FIG. 5 is a diagram of an information transmission method 200 according to this application. In the method 200, an example in which a terminal device supports a first modulation scheme but does not support a second modulation scheme is used for description. For a network device, the method 200 may be combined with a method 300, or the method 200 and the method 300 may be separately implemented.

S201: The network device sends, to the terminal device, first indication information (referred to as first indication information #3 below for ease of description) modulated based on the first modulation scheme and second indication information (referred to as second indication information #3 below for ease of description) modulated based on the second modulation scheme. Correspondingly, the terminal device receives, from the network device in an envelope-demodulation scheme, the first indication information #3 modulated based on the first modulation scheme.

For example, the first indication information #3 and the second indication information #3 may be carried in a same wake-up signal, for example, the WUR.

In a possible implementation, the first indication information #3 and the second indication information #3 in S201 may be respectively understood as the first indication information #1 and the second indication information #1 in the method 100. For details, refer to the related descriptions in the method 100.

In another possible implementation, the first indication information #3 and the second indication information #3 in S201 may be respectively understood as the first indication information #2 and the second indication information #2 in the method 100. For details, refer to the related descriptions in the method 100.

Optionally, before S201, the method 100 further includes: The network device generates the first indication information #3 and the second indication information #3.

For possible examples and corresponding descriptions of the first modulation scheme and the second modulation scheme, refer to the corresponding descriptions in the method 100.

That the terminal device receives the first indication information #3 from the network device in the envelope-demodulation scheme may be implemented in the following manners. For example, the terminal device includes a separate low-power small circuit, for example, the wake-up circuit. The terminal device turns on the wake-up circuit, detects the first indication information #3, and obtains the first indication information #3 through demodulation based on the first modulation scheme.

S202: The terminal device determines, based on the first indication information, whether to wake up the terminal device.

For example, the terminal device includes a separate low-power small circuit, for example, the wake-up circuit. The terminal device further includes the main circuit. S202 may be understood as that the wake-up circuit determines, based on the first indication information #3, whether to wake up the main circuit. Optionally, if the main circuit is woken up, the main circuit is used to receive a paging message on a PO or directly send a PRACH on a RACH resource.

In the foregoing solution, the network device sends, to the terminal device, indication information modulated based on different modulation schemes, and the terminal device can obtain the first indication information through demodulation based on a supported modulation scheme, and determine, based on the first indication information, whether to wake up the terminal device. In this way, the network device can send same indication information to terminal devices that support one or more modulation schemes, to indicate whether to wake up the terminal device. In this way, a communication system with information modulated or demodulated by using different modulation schemes can also be compatible with a terminal device that supports only one modulation scheme, so that a case in which all terminal devices are required to support different modulation schemes can be avoided, to reduce complexity of the terminal device. In addition, a case in which the network device sends different indication information to terminal devices that support different modulation schemes can be avoided, to reduce processing complexity of the network device.

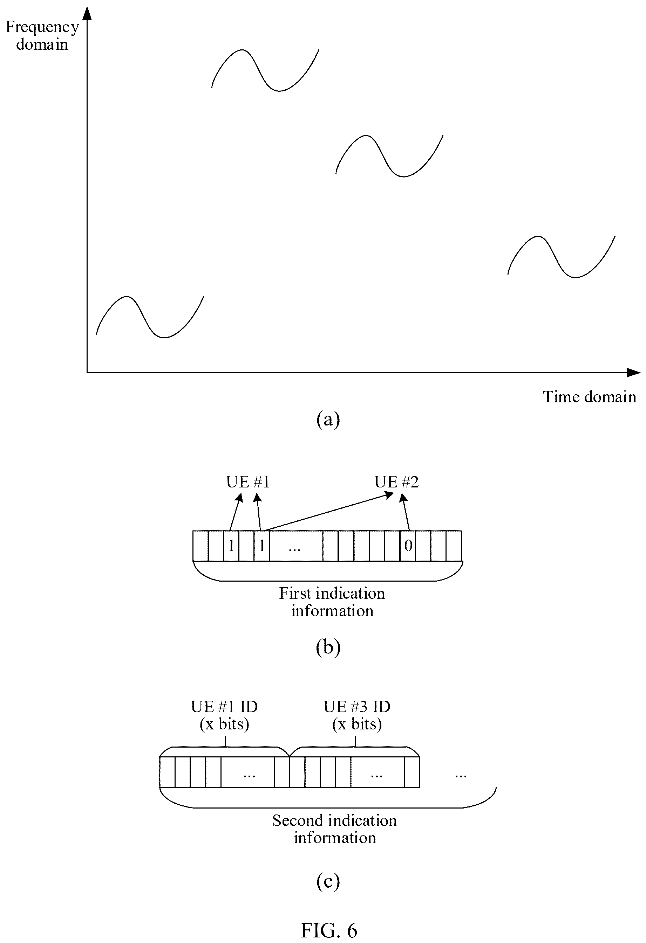

The following describes an information transmission method 300 provided in this application with reference to FIG. 6. The method 300 may be understood as a further specific example of Solution 1 in the method 100. An example in which a first modulation scheme is OOK modulation, a second modulation scheme is FSK modulation, and first indication information #1 and second indication information #1 are carried in a WUR signal is used for description.

For example, S301 may be used as a specific example of S101a. S301: Perform transmission of each WUR signal by using one or more orthogonal frequency division multiplexing (orthogonal frequency division multiplexing, OFDM) symbols. As shown in (a) in FIG. 6, an example in which a network device sends four WUR signals to a terminal device is used. The first indication information #1 modulated in an OOK scheme is carried on a time domain resource corresponding to each WUR signal, and the second indication information #1 modulated in an FSK scheme is carried on a frequency domain resource corresponding to each WUR signal. The terminal device obtains the first indication information #1 through demodulation based on the OOK modulation scheme, and obtains the second indication information #1 through demodulation based on the FSK modulation scheme.

For example, the first indication information #1 is represented by using a bitmap. A random function value corresponding to each terminal device occupies at least two bits in the first indication information #1. For example, the random function value corresponding to the terminal device may be determined based on a UE ID of the terminal device. It is assumed that the network device needs to wake up a UE #1, and does not wake up a UE #2. As shown in (b) in FIG. 6, a random function value corresponding to the UE #1 is in two bits in the first indication information #1, and a random function value corresponding to the UE #2 is in two bits in the first indication information #1. Both bits of the random function value corresponding to the UE #1 in the first indication information #1 are set to 1. At least one bit of the random function value corresponding to the UE #2 in the first indication information #1 is not set to 1. Optionally, the bits of the random function values corresponding to the UE #1 and the UE #2 in the first indication information #1 may overlap.

For example, the second indication information #1 is shown in (c) in FIG. 6. A UE ID of each UE corresponds to x bits in the second indication information, where x≥1 and x is an integer.

It should be noted that (b) in FIG. 6 is merely an example, does not limit a case in which the first indication information #1 corresponds to only two UEs, and does not limit a case in which a random function value corresponding to each UE corresponds to only two bits in the first indication information #1. (c) in FIG. 6 is merely an example, and does not limit a case in which the second indication information includes only UE IDs of the UE #1 and a UE #3.

For example, S302 may be used as a specific example of S102a. S302: Using an example in which the terminal device is the UE #1, when both the first indication information #1 and the second indication information #1 indicate the ID of the UE #1, a wake-up circuit of the terminal device determines, based on the first indication information #1 and the second indication information #1, to wake up a main circuit.

In the foregoing solution, one signal sent by the network device to the terminal device separately carries, in time domain and frequency domain, indication information modulated based on different modulation schemes, so that resource utilization can be further improved.

Optionally, as described in the method 100, within a same time period, a quantity of bits for transmission of the first indication information #1 is less than a quantity of bits for transmission of the second indication information #1. For example, within the same time period, a ratio of the quantity of bits for transmission of the first indication information #1 to the quantity of bits for transmission of the second indication information #1 is

$1 : \log_2^N$, where N is a quantity of candidate subcarriers in the frequency shift keying modulation scheme, and N is a positive integer. It may be understood that one OFDM symbol carries one bit in the first indication information #1 based on the OOK modulation scheme, and carries

$\log_2^N$ bits in the second indication information #1 based on the FSK modulation scheme. The following provides a specific example.

Example 3: It is assumed that a signal modulated in the FSK scheme has four candidate subcarriers in frequency domain, that is, N=4. In this case, $\log_2^{N}=2$. Therefore, bit information carried in each OFDM symbol in frequency domain is two bits. It is assumed that the first indication information #1 is 1110, and a size of the first indication information #1 is four bits. The first indication information #1 on which Manchester encoding is performed is 10101001, and needs to be carried in eight OFDM symbols in total. Four OFDM symbols are used to send "1", and four OFDM symbols are used to send "0". On each OFDM symbol for sending "1", two bits in the second indication information #1 may be carried in the FSK scheme. In this case, the four OFDM symbols that are in the eight OFDM symbols and that are used to send "1" can carry eight bits in the second indication information #1 in total. Therefore, within a same time period, for example, on the eight OFDM symbols herein, transmission of the four bits in the first indication information #1 can be performed, and the eight bits in the second indication information #1 can be sent.

Alternatively, in another implementation of the method 300, if the terminal device supports only the OOK modulation, the terminal device determines, based only on the first indication information #1, whether to wake up the terminal device. For details, refer to the foregoing descriptions related to the first indication information #1.

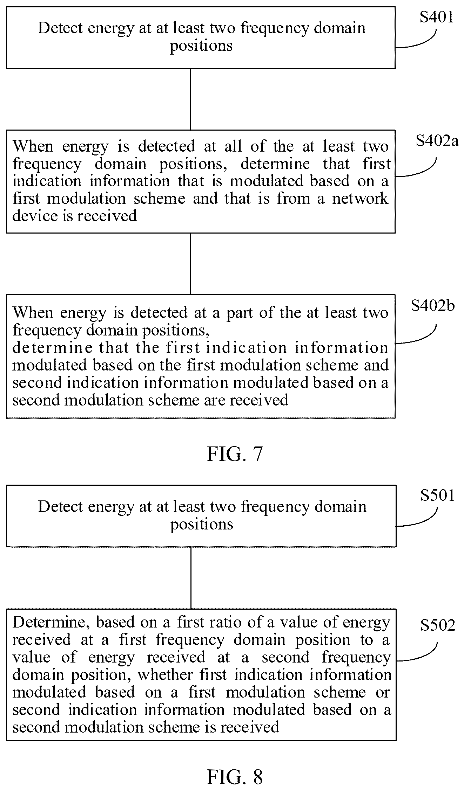

With reference to FIG. 7 to FIG. 9, the following provides several possible implementations in which the terminal device in the method 100 receives the first indication information #1 and the second indication information #1 in an envelope-demodulation scheme, including methods 400 to 600. For descriptions of a first modulation scheme and a second modulation scheme in the methods 400 to 600, refer to the corresponding descriptions in the method 100.

FIG. 7 is a diagram of an information transmission method 400 according to this application.

S401: A terminal device detects energy at at least two frequency domain positions.

For example, the frequency domain position herein may be a subcarrier.

S402 may be implemented in two manners: for example, S402a and S402b below.

S402a: When energy is detected at all of the at least two frequency domain positions, determine that first indication information #1 modulated based on a first modulation scheme is received.

For example, in this application, when a value of the detected energy is greater than or equal to a first threshold, the terminal device may determine that the energy is detected. Unified descriptions are provided herein, and details are not described in the method 500 and the method 600 again.

That the energy is detected at all of the at least two frequency domain positions may be understood as that values of the energy detected at all of the at least two frequency domain positions are greater than or equal to the first threshold.

S402b: When energy is detected at a part of the at least two frequency domain positions, determine that the first indication information #1 modulated based on the first modulation scheme and second indication information #1 modulated based on a second modulation scheme are received.

Example 4-1: When a value of energy detected at a first frequency domain position is a largest value in the values of the energy detected at the at least two frequency domain positions, the terminal device determines the second indication information #1 based on the first frequency domain position. For example, with reference to Example 3, there are four candidate subcarriers in frequency domain, including a subcarrier #1 to a subcarrier #4. Assuming that a value of energy detected by the terminal device on the subcarrier #1 is a largest value, the terminal device may determine that a part or all of bits in the second indication information #1 are received on the subcarrier #1.

It may be understood that there may be one or more first frequency domain configurations and largest values in Example 4-1. Example 4-2: Values of energy detected at m first frequency domain positions are m largest values in the values of the energy detected at the at least two frequency domain positions, where m≥1. The terminal device determines the second indication information #1 based on the m first frequency domain positions. It may be understood that the values of the energy detected at the at least two frequency domain positions are sequentially arranged in descending order, and the first m values are the m largest values in the values of the energy detected at the at least two frequency domain positions. For example, with reference to Example 3, there are four candidate subcarriers in frequency domain, including the subcarrier #1 to the subcarrier #4. Assuming that in values of energy detected by the terminal device on the four candidate subcarriers, both a value of energy detected on the subcarrier #1 and a value of energy detected on the subcarrier #4 are greater than a value of energy detected on the subcarrier #2 and a value of energy detected on the subcarrier #3, the terminal device may determine that a part or all of bits in the second indication information #1 are received on the subcarrier #1 and the subcarrier #4.

In the foregoing solution, a terminal can demodulate indication information modulated based on different modulation schemes, so that information modulated or demodulated in different modulation schemes can be compatible by using a communication system.

FIG. 8 is a diagram of an information transmission method 500 according to this application.

S501: A terminal device detects energy at at least two frequency domain positions.

For example, the frequency domain position herein may be a subcarrier.

The at least two frequency domain positions include a first frequency domain position and a second frequency domain position, and the first frequency domain position is different from the second frequency domain position.

S502: The terminal device determines, based on a first ratio of a value of energy received at the first frequency domain position to a value of energy received at the second frequency domain position, whether first indication information modulated based on a first modulation scheme or second indication information modulated based on a second modulation scheme is received. Specifically, this includes but is not limited to the following several cases.

Case 1: When the first ratio is greater than or equal to a second threshold or the first ratio is less than or equal to a third threshold, it is determined that the first indication information and second indication information are received. Optionally, the second threshold is greater than 1. Optionally, the third threshold is less than 1.

Case 2: The second frequency domain position includes at least one third frequency domain position, and the first ratio includes at least one second ratio. When each of the at least one second ratio is greater than or equal to the second threshold, the terminal device determines second indication information #1 based on the first frequency domain position. When one or more ratios in the at least one second ratio are less than or equal to the third threshold, the terminal device determines the second indication information #1 based on a third frequency domain position corresponding to a smallest value in the one or more ratios.

For example, with reference to Example 3, there are four candidate subcarriers in frequency domain, including a subcarrier #1 to a subcarrier #4. The terminal device detects energy on the four candidate subcarriers. It is assumed that the second threshold is 1.11, and the third threshold is 0.99. For example, the first frequency domain position is the subcarrier #1, and the at least one third frequency domain position is three subcarriers, that is, the subcarrier #2 to the subcarrier #4. For example, the at least one second ratio is three second ratios, that is, a ratio of a value of energy detected on the subcarrier #1 to a value of energy detected on the subcarrier #2, a ratio of the value of the energy detected on the subcarrier #1 to a value of energy detected on the subcarrier #3, and a ratio of the value of the energy detected on the subcarrier #1 to a value of energy detected on the subcarrier #4. Case 1: When the three second ratios are all greater than or equal to 1.11, the terminal device may determine that a part or all of bits in the second indication information #1 are received on the subcarrier #1. Case 2: The ratio of the value of the energy detected on the subcarrier #1 to the value of the energy detected on the subcarrier #3 is used as an example of the one or more ratios in the at least one second ratio. When the ratio of the value of the energy detected on the subcarrier #1 to the value of the energy detected on the subcarrier #3 is less than or equal to 0.99, the terminal device may determine that a part or all of the bits in the second indication information #1 are received on the subcarrier #3.

In the foregoing solution, a terminal can demodulate indication information modulated based on different modulation schemes, so that information modulated or demodulated in different modulation schemes can be compatible by using a communication system.

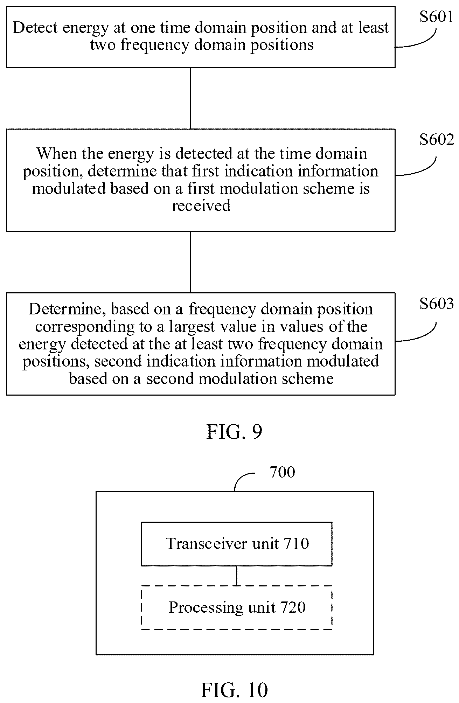

FIG. 9 is a diagram of an information transmission method 600 according to this application.

S601: A terminal device detects energy at one time domain position and at least two frequency domain positions.

For example, the frequency domain position herein may be a subcarrier.

The at least two frequency domain positions include a first frequency domain position and a second frequency domain position, and the first frequency domain position is different from the second frequency domain position.

S602: When the energy is detected at the time domain position, the terminal device determines that first indication information modulated based on a first modulation scheme is received.

For example, the time domain position herein may be one or more OFDM symbols.

S603: When receiving the first indication information, the terminal device determines, based on a frequency domain position corresponding to a largest value in values of the energy detected at the at least two frequency domain positions, second indication information modulated based on a second modulation scheme.

It may be understood that if the first indication information is not received at the first time domain position, S603 may not be performed.

For example, for S603, refer to the descriptions corresponding to Example 4-1 and Example 4-2.

In the foregoing solution, a terminal can demodulate indication information modulated based on different modulation schemes, so that information modulated or demodulated in different modulation schemes can be compatible by using a communication system. The terminal device separately detects the energy at the time domain position and the frequency domain position, and determines a detection result of the time domain position only when the energy is detected at the time domain position. Therefore, when the terminal device does not detect the energy at the time domain position, determining of the detection result of the time domain position can be avoided, to reduce energy consumption of the terminal device and save a resource.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

FIG. 10 is a diagram of an information transmission apparatus 700 to which this application is applicable. The apparatus 700 includes a transceiver unit 710, where the transceiver unit 710 may be configured to implement a corresponding communication function. The transceiver unit 710 may also be referred to as a communication interface or a communication unit.

Optionally, the apparatus 700 may further include a processing unit 720, where the processing unit 720 may be configured to perform data processing.

Optionally, the apparatus 700 further includes a storage unit. The storage unit may be configured to store instructions and/or data. The processing unit 720 may read the instructions and/or the data in the storage unit, to enable the apparatus to implement actions performed by the communication device (for example, the terminal device or the network device) in the foregoing method embodiments.

The apparatus 700 may be configured to perform the actions performed by the communication device (for example, the terminal device or the network device) in the foregoing method embodiments. In this case, the apparatus 700 may be a component of the communication device (for example, the terminal device or the network device). The transceiver unit 710 is configured to perform receiving and sending-related operations on a communication device (for example, the terminal device or the network device) side in the foregoing method embodiments, and the processing unit 720 is configured to perform processing-related operations on the communication device (for example, the terminal device or the network device) side in the foregoing method embodiments.

In a design, the apparatus 700 is configured to perform actions performed by the terminal device in the foregoing method embodiments.

Specifically, in a possible implementation, the transceiver unit 710 is configured to receive, from a network device in an envelope-demodulation scheme, first indication information modulated based on a first modulation scheme and second indication information modulated based on a second modulation scheme, where a combination of the first indication information and the second indication information indicates whether to wake up the terminal device, and the first modulation scheme is different from the second modulation scheme. The processing unit 720 is configured to determine, based on the combination of the first indication information and the second indication information, whether to wake up the terminal device.

Specifically, in another possible implementation, the transceiver unit 710 is configured to receive, from a network device in an envelope-demodulation scheme, first indication information modulated based on a first modulation scheme and second indication information modulated based on a second modulation scheme, where the first indication information indicates whether to wake up the terminal device, the second indication information indicates an operation performed after the terminal device is woken up, and the first modulation scheme is different from the second modulation scheme. The processing unit 720 is configured to determine, based on the first indication information, whether to wake up the terminal device.

It may be understood that a specific process in which the units perform the foregoing corresponding steps is already described in detail in the foregoing method embodiments. For brevity, details are not described herein again.

In another design, the apparatus 700 is configured to perform actions performed by the network device in the foregoing method embodiments.

Specifically, in a possible implementation, the processing unit 720 is configured to generate first indication information and second indication information, where a combination of the first indication information and the second indication information indicates whether to wake up the terminal device. The transceiver unit 710 is configured to send, to the terminal device, the first indication information modulated based on a first modulation scheme and the second indication information modulated based on a second modulation scheme, where the first modulation scheme is different from the second modulation scheme.

Specifically, in another possible implementation, the processing unit 720 is configured to generate first indication information and second indication information, where the first indication information indicates whether to wake up the terminal device, and the second indication information indicates an operation performed after the terminal device is woken up. The processing unit 720 is further configured to send, to the terminal device, the first indication information modulated based on a first modulation scheme and the second indication information modulated based on a second modulation scheme, where the first modulation scheme is different from the second modulation scheme.

It may be understood that a specific process in which the units perform the foregoing corresponding steps is already described in detail in the foregoing method embodiments. For brevity, details are not described herein again.

It may be further understood that the apparatus 700 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 700 may be specifically the terminal device in the foregoing embodiments, and may be configured to perform procedures and/or steps corresponding to the terminal device in the foregoing method embodiments; or the apparatus 700 may be specifically the network device in the foregoing embodiments, and may be configured to perform procedures and/or steps corresponding to the network device in the foregoing method embodiments. To avoid repetition, details are not described herein again.

The apparatus 700 in each of the foregoing solutions has functions of implementing the corresponding steps performed by the terminal device in the foregoing methods, or the apparatus 700 in each of the foregoing solutions has functions of implementing the corresponding steps performed by the network device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving-sending operations and a related processing operation in the method embodiments.

In addition, the transceiver unit 710 may alternatively be a transceiver circuit (for example, may include a receive circuit and a sending circuit), and the processing unit may be a processing circuit.

It should be noted that the apparatus in FIG. 10 may be the network element or the device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

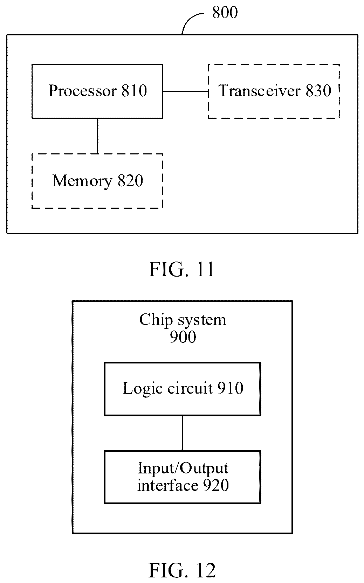

FIG. 11 is a diagram of another information transmission apparatus 800 to which this application is applicable. The apparatus 800 includes a processor 810. The processor 810 is coupled to a memory 820. The memory 820 is configured to store a computer program or instructions and/or data. The processor 810 is configured to: execute the computer program or instructions stored in the memory 820, or read the data stored in the memory 820, to perform the methods in the foregoing method embodiments.

Optionally, there are one or more processors 810.

Optionally, there are one or more memories 820.

Optionally, the memory 820 and the processor 810 are integrated together, or are disposed separately.

Optionally, as shown in FIG. 11, the apparatus 800 further includes a transceiver 830. The transceiver 830 is configured to: receive and/or send a signal. For example, the processor 810 is configured to control the transceiver 830 to receive and/or send the signal.

In a solution, the apparatus 800 is configured to implement operations performed by the terminal device in the foregoing method embodiments.

For example, the processor 810 is configured to execute the computer program or the instructions stored in the memory 820, to implement related operations of the terminal device in the foregoing method embodiments, for example, the method performed by the terminal device or the UE in the embodiment shown in any one of FIG. 2 to FIG. 8.

In a solution, the apparatus 800 is configured to implement operations performed by the network device in the foregoing method embodiments.

For example, the processor 810 is configured to execute the computer program or the instructions stored in the memory 820, to implement related operations of the network device in the foregoing method embodiments, for example, the method performed by the network device or the base station in the embodiment shown in any one of FIG. 2 to FIG. 8.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

FIG. 12 is a diagram of a chip system 900 to which this application is applicable. The chip system 900 (or may also be referred to as a processing system) includes a logic circuit 910 and an input/output interface (input/output interface) 920.

The logic circuit 910 may be a processing circuit in the chip system 900. The logic circuit 910 may be coupled to and connected to a storage unit, and invoke instructions in the storage unit, so that the chip system 900 can implement the methods and functions in embodiments of this application. The input/output interface 820 may be an input/output circuit in the chip system 900, and outputs information processed by the chip system 900, or inputs to-be-processed data or signaling information to the chip system 900 for processing.

Specifically, for example, if the chip system 900 is installed in a terminal device, the logic circuit 910 is coupled to the input/output interface 820, and the logic circuit 910 may send a message to a network device through the input/output interface 820. The message may be generated by the logic circuit 910. Alternatively, the input/output interface 820 may input a message from the network device to the logic circuit 910 for processing. For another example, if the chip system 900 is installed in the network device, the logic circuit 910 is coupled to the input/output interface 820, and the logic circuit 910 may send a message to the terminal device through the input/output interface 820. The message may be generated by the logic circuit 910. Alternatively, the input/output interface 820 may input a message from the terminal device to the logic circuit 910 for processing.

In a solution, the chip system 900 is configured to implement operations performed by the terminal device in the foregoing method embodiments.

For example, the logic circuit 910 is configured to implement processing-related operations performed by the terminal device in the foregoing method embodiments, for example, processing-related operations performed by the terminal device or the UE in the embodiment shown in any one of FIG. 4 to FIG. 9. The input/output interface 820 is configured to implement sending-and/or receiving-related operations performed by the terminal device in the foregoing method embodiments, for example, sending-and/or receiving-related operations performed by the terminal device or the UE in the embodiment shown in any one of FIG. 4 to FIG. 9.

In another solution, the chip system 900 is configured to implement operations performed by the network device in the foregoing method embodiments.

For example, the logic circuit 910 is configured to implement processing-related operations performed by the network device in the foregoing method embodiments, for example, processing-related operations performed by the network device or the base station in the embodiment shown in any one of FIG. 4 to FIG. 9. The input/output interface 920 is configured to implement sending-and/or receiving-related operations performed by the network device in the foregoing method embodiments, for example, sending-and/or receiving-related operations performed by the network device or the base station in the embodiment shown in any one of FIG. 4 to FIG. 9.

An embodiment of this application further provides a computer-readable storage medium, where the computer-readable storage medium stores computer instructions used to implement the method performed by the terminal device or the network device in the foregoing method embodiments.

For example, when a computer program is executed by a computer, the computer is enabled to implement the method performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system. The communication system includes the terminal device and the network device in the foregoing embodiments. For example, the system includes the terminal device and the network device in the embodiment shown in any one of FIG. 4 to FIG. 9.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information transmission method, applied to a terminal device or a chip system in the terminal device, and comprising:

   receiving, from a network device in an envelope-demodulation scheme, first indication information modulated based on a first modulation scheme and second indication information modulated based on a second modulation scheme, wherein a combination of the first indication information and the second indication information indicates whether to wake up the terminal device, and the first modulation scheme is different from the second modulation scheme; and
   determining, based on the combination of the first indication information and the second indication information, whether to wake up the terminal device.

2. The method according to claim 1, wherein the combination of the first indication information and the second indication information specifically indicates, by indicating identification information of the terminal device, to wake up the terminal device.

3. An information transmission method, applied to a terminal device or a chip system in the terminal device, and comprising:

   receiving, from a network device in an envelope-demodulation scheme, first indication information modulated based on a first modulation scheme and second indication information modulated based on a second modulation scheme, wherein the first indication information indicates whether to wake up the terminal device, the second indication information indicates an operation performed after the terminal device is woken up, and the first modulation scheme is different from the second modulation scheme; and
determining, based on the first indication information, whether to wake up the terminal device.

4. The method according to claim 3, wherein the first indication information specifically indicates, by indicating identification information of the terminal device, to wake up the terminal device.

5. The method according to claim 3 or 4, wherein when it is determined, based on the first indication information, to wake up the terminal device, the method further comprises:
   determining, based on the second indication information, the operation performed after the terminal device is woken up.

6. The method according to any one of claims 1 to 5, wherein within a same time period, a quantity of bits for transmission of the first indication information is less than a quantity of bits for transmission of the second indication information.

7. The method according to any one of claims 1 to 6, wherein
   the first modulation scheme comprises an on-off keying modulation scheme, and the second modulation scheme comprises a frequency shift keying modulation scheme.

8. The method according to any one of claims 1 to 7, wherein the method further comprises:
   receiving, from the network device in a non-envelope-demodulation scheme, third indication information modulated based on a third modulation scheme, wherein the third indication information indicates cell broadcast information that needs to be used after the terminal device is woken up.

9. The method according to claim 8, wherein the third modulation scheme comprises a phase modulation scheme.

10. An information transmission method, applied to a network device or a chip system in the network device, and comprising:

    generating first indication information and second indication information, wherein a combination of the first indication information and the second indication information indicates whether to wake up the terminal device; and
    sending, to the terminal device, the first indication information modulated based on a first modulation scheme and the second indication information modulated based on a second modulation scheme, wherein the first modulation scheme is different from the second modulation scheme.

11. The method according to claim 10, wherein
the combination of the first indication information and the second indication information specifically indicates, by indicating identification information of the terminal device, to wake up the terminal device.

12. An information transmission method, applied to a network device or a chip system in the network device, and comprising:

generating first indication information and second indication information, wherein the first indication information indicates whether to wake up the terminal device, and the second indication information indicates an operation performed after the terminal device is woken up; and
sending, to the terminal device, the first indication information modulated based on a first modulation scheme and the second indication information modulated based on a second modulation scheme, wherein the first modulation scheme is different from the second modulation scheme.

13. The method according to claim 12, wherein the first indication information specifically indicates, by indicating identification information of the terminal device, to wake up the terminal device.

14. The method according to any one of claims 10 to 13, wherein within a same time period, a quantity of bits for transmission of the first indication information is less than a quantity of bits for transmission of the second indication information.

15. The method according to any one of claims 10 to 14, wherein
the first modulation scheme comprises an on-off keying modulation scheme, and the second modulation scheme comprises a frequency shift keying modulation scheme.

16. The method according to any one of claims 10 to 15, wherein the method further comprises:
sending, to the terminal device, third indication information modulated based on a third modulation scheme, wherein the third indication information indicates cell broadcast information that needs to be used.

17. The method according to claim 16, wherein the third modulation scheme comprises a phase modulation scheme.

18. An information transmission method, applied to a terminal device or a chip system in the terminal device, and comprising:

detecting energy at at least two frequency domain positions; and
when energy is detected at all of the at least two frequency domain positions, determining that first indication information modulated based on a first modulation scheme is received; or
when energy is detected at a part of the at least two frequency domain positions, determining that first indication information modulated based on a first modulation scheme and second indication information modulated based on a second modulation scheme are received.

19. The method according to claim 18, wherein

the first modulation scheme comprises an on-off keying modulation scheme; and
the second modulation scheme comprises a frequency shift keying modulation scheme.

20. The method according to claim 18 or 19, wherein when the energy is detected at the part of the at least two frequency domain positions, the method further comprises:
when a value of energy detected at a first frequency domain position is a largest value in values of the energy detected at the at least two frequency domain positions, determining the second indication information based on the first frequency domain position.

21. An information transmission method, applied to a terminal device or a chip system in the terminal device, and comprising:

detecting energy at at least two frequency domain positions, wherein
the at least two frequency domain positions comprise a first frequency domain position and a second frequency domain position; and
determining, based on a first ratio of a value of energy received at the first frequency domain position to a value of energy received at the second frequency domain position, whether first indication information modulated based on a first modulation scheme or second indication information modulated based on a second modulation scheme is received, wherein the first frequency domain position is different from the second frequency domain position.

22. The method according to claim 21, wherein

the first modulation scheme comprises an on-off keying modulation scheme; and
the second modulation scheme comprises a frequency shift keying modulation scheme.

23. The method according to claim 21 or 22, wherein the determining, based on a first ratio of a value of energy received at the first frequency domain position in the at least two frequency domain positions to a value of energy received at the second frequency domain position in the at least two frequency domain positions, whether first indication information modulated based on a first modulation scheme and second indication information modulated based on a second modulation scheme are received comprises:
when the first ratio is greater than or equal to a second threshold or the first ratio is less than or equal to a third threshold, determining that the first indication information and the second indication information are received.

24. The method according to claim 23, wherein the second frequency domain position comprises at least one third frequency domain position, the first ratio comprises at least one second ratio, the second ratio is a ratio of the value of the energy received at the first frequency domain position to a value of the energy received at each third frequency domain position, and the method further comprises:

when each of the at least one second ratio is greater than or equal to the second threshold, determining the second indication information based on the first frequency domain position; and
when one or more ratios in the at least one second ratio are less than or equal to the third threshold, determining the second indication information based on the third frequency domain position corresponding to a smallest value in the one or more ratios.

25. An information transmission method, applied to a terminal device or a chip system in the terminal device, and comprising:

detecting energy at one time domain position and at least two frequency domain positions;
when the energy is detected at the time domain position, determining that first indication information modulated based on a first modulation scheme is received; and
when the first indication information is received, determining, based on a frequency domain position corresponding to a largest value in values of the energy detected at the at least two frequency domain positions, second indication information modulated based on a second modulation scheme.

26. The method according to claim 25, wherein

the first modulation scheme comprises an on-off keying modulation scheme; and
the second modulation scheme comprises a frequency shift keying modulation scheme.

27. The method according to any one of claims 18 to 26, wherein the method further comprises:
determining, based on the value of the detected energy being greater than or equal to a first threshold, that the energy is detected.

28. An information transmission apparatus, comprising:

a module configured to implement the method according to any one of claims 1, 2, and 6 to 9; or
a module configured to implement the method according to any one of claims 3 to 9; or
a module configured to implement the method according to any one of claims 10, 11, and 14 to 17; or
a module configured to implement the method according to any one of claims 12 to 17; or
a module configured to implement the method according to any one of claims 18 to 20; or
a module configured to implement the method according to any one of claims 21 to 24; or
a module configured to implement the method according to any one of claims 25 to 27.

29. An information transmission apparatus, comprising:

a processor and a memory, wherein
the memory is configured to store a computer program; and
the processor is configured to execute the computer program stored in the memory, to enable the communication apparatus to perform the communication method according to any one of claims 1, 2, and 6 to 9, to enable the communication apparatus to perform the communication method according to any one of claims 3 to 9, to enable the communication apparatus to perform the communication method according to any one of claims 10, 11, and 14 to 17, to enable the communication apparatus to perform the communication method according to any one of claims 12 to 17, to enable the communication apparatus to perform the communication method according to any one of claims 18 to 20, to enable the communication apparatus to perform the communication method according to any one of claims 21 to 24, or to enable the communication apparatus to perform the communication method according to any one of claims 25 to 27.

30. A computer-readable storage medium, wherein the computer-readable storage medium stores instructions, and when the computer instructions are run on a computer, the computer is enabled to perform the method according to any one of claims 1, 2, and 6 to 9, the computer is enabled to perform the method according to any one of claims 3 to 9, the computer is enabled to perform the method according to any one of claims 10, 11, and 14 to 17, the computer is enabled to perform the method according to any one of claims 12 to 17, the computer is enabled to perform the method according to any one of claims 18 to 20, the computer is enabled to perform the method according to any one of claims 21 to 24, or the computer is enabled to perform the method according to any one of claims 25 to 27.

31. A chip, comprising:

   a memory, configured to store a computer program; and
   a processor, configured to: read and execute the computer program stored in the memory, wherein when the computer program is executed, the processor performs the method according to any one of claims 1, 2, and 6 to 9, the processor performs the method according to any one of claims 3 to 9, the processor performs the method according to any one of claims 10, 11, and 14 to 17, the processor performs the method according to any one of claims 12 to 17, the processor performs the method according to any one of claims 18 to 20, the processor performs the method according to any one of claims 21 to 24, or the processor performs the method according to any one of claims 25 to 27.

32. A computer program product, wherein the computer program product comprises computer program code, and when the computer program code is run on a computer, the computer is enabled to perform the method according to any one of claims 1, 2, and 6 to 9, the computer is enabled to perform the method according to any one of claims 3 to 9, the computer is enabled to perform the method according to any one of claims 10, 11, and 14 to 17, the computer is enabled to perform the method according to any one of claims 12 to 17, the computer is enabled to perform the method according to any one of claims 18 to 20, the computer is enabled to perform the method according to any one of claims 10, 11, and 14 to 17, the computer is enabled to perform the method according to any one of claims 21 to 24, or the computer is enabled to perform the method according to any one of claims 25 to 27.

FIG. 1

FIG. 2

FIG. 3

| Terminal device | | Network device |
|---|---|---|

S101a: First indication information modulated based on a first modulation scheme and second indication information modulated based on a second modulation scheme

S102a: Determine, based on a combination of the first indication information and the second indication information, whether to wake up the terminal device

Solution 1

S101b: First indication information modulated based on a first modulation scheme and second indication information modulated based on a second modulation scheme

S102b: Determine, based on the first indication information, whether to wake up the terminal device

Solution 2

FIG. 4

| Terminal device | Network device |
|---|---|

S201: First indication information modulated based on a first modulation scheme and second indication information modulated based on a second modulation scheme

S202: Determine, based on the first indication information, whether to wake up the terminal device

FIG. 5

Frequency
domain

Time domain

(a)

UE #1          UE #2

| | |1| |1| ... | | | | | |0| | | |

First indication
information

(b)

UE #1 ID          UE #3 ID
(x bits)          (x bits)

| | | | | ... | | | | | | ... | |     ...

Second indication
information

(c)

FIG. 6

Detect energy at at least two frequency domain positions    S401

When energy is detected at all of the at least two frequency domain positions, determine that first indication information that is modulated based on a first modulation scheme and that is from a network device is received    S402a

When energy is detected at a part of the at least two frequency domain positions,
determine that the first indication information modulated based on the first modulation scheme and second indication information modulated based on a second modulation scheme are received    S402b

FIG. 7

Detect energy at at least two frequency domain positions    S501

Determine, based on a first ratio of a value of energy received at a first frequency domain position to a value of energy received at a second frequency domain position, whether first indication information modulated based on a first modulation scheme or second indication information modulated based on a second modulation scheme is received    S502

FIG. 8

| | |
|---|---|
| Detect energy at one time domain position and at least two frequency domain positions | S601 |

| | |
|---|---|
| When the energy is detected at the time domain position, determine that first indication information modulated based on a first modulation scheme is received | S602 |

| | |
|---|---|
| Determine, based on a frequency domain position corresponding to a largest value in values of the energy detected at the at least two frequency domain positions, second indication information modulated based on a second modulation scheme | S603 |

FIG. 9

700

Transceiver unit 710

Processing unit 720

FIG. 10

800

Processor 810 — Transceiver 830

Memory 820

FIG. 11

Chip system
900

Logic circuit 910

Input/Output
interface 920

FIG. 12

## INTERNATIONAL SEARCH REPORT

| International application No. |
|---|
| **PCT/CN2023/124132** |

### A.    CLASSIFICATION OF SUBJECT MATTER

H04L 27/00(2006.01)i

According to International Patent Classification (IPC) or to both national classification and IPC

### B.    FIELDS SEARCHED

Minimum documentation searched (classification system followed by classification symbols)

IPC: H04L,H04W

Documentation searched other than minimum documentation to the extent that such documents are included in the fields searched

Electronic data base consulted during the international search (name of data base and, where practicable, search terms used)

3GPP, CNTXT, ENTXTC: 包络检波, 包络检测, 第二调制, 第一调制, 唤醒, 频率, 频域, 时间, 时域, 位置, 指示, FSK, OOK, wake up, WUS, envelope detect+, second modulation, first modulation, wake-up, frequency, frequency domain, time, time domain, position, indicat+

### C.    DOCUMENTS CONSIDERED TO BE RELEVANT

| Category* | Citation of document, with indication, where appropriate, of the relevant passages | Relevant to claim No. |
|---|---|---|
| X | WO 2019177294 A1 (LG ELECTRONICS INC.) 19 September 2019 (2019-09-19) description, paragraphs 104-108 and 329-432, and figures 28-30 | 1-32 |
| A | CN 107547459 A (ZTE CORP.) 05 January 2018 (2018-01-05) entire document | 1-32 |
| A | CN 109964511 A (HUAWEI TECHNOLOGIES CO., LTD.) 02 July 2019 (2019-07-02) entire document | 1-32 |
| A | CN 112567820 A (SONY CORP.) 26 March 2021 (2021-03-26) entire document | 1-32 |
| A | US 2020015166 A1 (WILUS INSTITUTE OF STANDARDS AND TECHNOLOGY INC.) 09 January 2020 (2020-01-09) entire document | 1-32 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 November 2023** | **08 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/124132**

| Patent document cited in search report | | | Publication date (day/month/year) | Patent family member(s) | | | Publication date (day/month/year) |
|---|---|---|---|---|---|---|---|
| WO | 2019177294 | A1 | 19 September 2019 | None | | | |
| CN | 107547459 | A | 05 January 2018 | None | | | |
| CN | 109964511 | A | 02 July 2019 | WO | 2019051953 | A1 | 21 March 2019 |
| CN | 112567820 | A | 26 March 2021 | JP | 2021533688 | A | 02 December 2021 |
| | | | | US | 2021185611 | A1 | 17 June 2021 |
| | | | | EP | 3834499 | A1 | 16 June 2021 |
| | | | | WO | 2020030497 | A1 | 13 February 2020 |
| US | 2020015166 | A1 | 09 January 2020 | KR | 20220146674 | A | 01 November 2022 |
| | | | | KR | 20190105069 | A | 11 September 2019 |
| | | | | WO | 2018131991 | A1 | 19 July 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211344650